(19) Europäisches Patentamt

European Patent Office

Office européen des brevets

(11) **EP 1 475 250 B1**

(12) **EUROPEAN PATENT SPECIFICATION**

(45) Date of publication and mention
of the grant of the patent:
**09.08.2006 Bulletin 2006/32**

(51) Int Cl.:
***B60C 23/06*** *(2006.01)*

(21) Application number: **03009787.7**

(22) Date of filing: **09.05.2003**

(54) **GPS (global positioning system) based method for determining a change of an inflation pressure of a tire and system therefor**

GPS (global positioning system) basierendes Verfahren und System zur Erkennung von Reifendruckänderungen

Méthode et système fondés sur le GPS (global positioning system) pour la détection du changement de pression d'un pneumatique

(84) Designated Contracting States:
**AT BE BG CH CY CZ DE DK EE ES FI FR GB GR HU IE IT LI LU MC NL PT RO SE SI SK TR**

(43) Date of publication of application:
**10.11.2004 Bulletin 2004/46**

(73) Proprietor: **Harman/Becker Automotive Systems GmbH**
**76307 Karlsbad (DE)**

(72) Inventors:
• **Rieck, Michael**
**21109 Hamburg (DE)**
• **Wietzke, Joachim**
**76228 Karlsruhe (DE)**

(74) Representative: **Bertsch, Florian Oliver et al**
**Kraus & Weisert**
**Patent- und Rechtsanwälte**
**Thomas-Wimmer-Ring 15**
**80539 München (DE)**

(56) References cited:
**EP-A- 1 336 513**         **DE-A- 19 821 582**

• **PATENT ABSTRACTS OF JAPAN vol. 2003, no. 04, 2 April 2003 (2003-04-02) & JP 2002 362117 A (HORIBA LTD), 18 December 2002 (2002-12-18)**
• **PATENT ABSTRACTS OF JAPAN vol. 1999, no. 02, 26 February 1999 (1999-02-26) & JP 10 297228 A (YOKOHAMA RUBBER CO LTD:THE), 10 November 1998 (1998-11-10)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates generally to a method for determining a change of a tire inflation pressure of a vehicle, and more particularly to a GPS-based method for determining the tire inflation pressure using the radius of the tire.

Tire inflation pressure monitoring is becoming more prevalent in all types of vehicles, such as cars, trucks, airplanes, motorcycles, bicycles, mobile industrial and construction equipment and the like. Vehicle operation, safety and mileage, for example depend on correct tire inflation pressures. When a puncture, slow leak or other low pressure condition occur, the driver of the vehicle should be alerted. Also with newer "no flat" tires pressure should be monitored within a certain mileage range.

It is known to use pressure sensors located on each tire in order to detect a low pressure status. This means, that for each tire, one sensor and one complex wiring harness is needed. For trucks, which have up to 18 or 20 tires this complicates the structure of the wiring harness and therefore raises the overall cost of such a vehicle.

It is also known to determine the inflation pressure of a tire by means of the following principle: If the vehicle is moving with a velocity v, the vehicle tire will rotate with an angular speed $\Omega$ = v:r, r being the radius of the tire. A tire having a low pressure status will have a smaller radius and will therefore rotate at a higher angular velocity than the other tires having a normal inflation pressure. It is therefore possible to determine the radius of the tire since the velocity and the number of rotations of the tire are known, the radius being a value depending directly on the inflation pressure.

DE 100 15 230 A1 relates to a method for determining the tire inflation pressure by measuring the angular velocity of the tire and the velocity of the vehicle itself. The angular velocity or the number of rotations of each tire can be obtained by means of a rotation detector. Such a detector is present in every new car since nowadays new cars are equipped with an ABS system that uses the rotation detector in order to determine whether a wheel is blocking or not.

In the above described method for determining the inflation pressure using the angular velocity and the number of rotations there is the problem that this method does not provide reliable results and that many corrections are needed to get good results. Furthermore, a complex calibration system is needed if correct tire inflation pressure is desired. Thus, there remains a need for a reliable, simple and automatic way of determining the inflation pressure of a tire and for systems providing an easy determination of the inflation pressure of the tire without using any direct inflation pressure sensors.

DE 198 21 582 A1 discloses a method for determining a tire inflation pressure by using the number of rotations and the GPS signal.

A need exists to further improve the method for determining the inflation pressure of a tire of a moving vehicle.

This is achieved with the method according to claim 1. Preferred embodiments are described in the dependent claims 2 to 16. The object is also achieved with a system for determining a change of a tire inflation pressure for a moving vehicle as described in claim 17, the dependent claims 18 to 24 describing preferred embodiments of the system.

According to the present invention the method for determining a change of a tire inflation pressure comprises the steps of determining a first traveled distance d1 of the tire of the vehicle using a first calculation method. Furthermore, a second traveled distance d2 of the tire of the vehicle is determined by using a second calculation method. In the next step, the difference between d1 and d2 is calculated.

According to a first aspect of the present invention, the first calculation method for determining d1 comprises the step of detecting the number of rotations N of the tire of the vehicle by means of a detector, d1 being calculated by the following equation:

$$ d1 = 2\pi \cdot r \cdot N, $$

r being a predetermined value of the radius of the tire. With this step the first traveled distance d1 can be calculated easily.

According to a preferred embodiment of the invention, the second calculation method comprises the steps of detecting a GPS signal of a moving vehicle, and of calculating the second traveled distance d2 of the moving vehicle on the basis of the detected GPS signal.

A GPS receiver installed in a moving car uses a triangular mechanism to calculate its position, GPS satellites broadcasting the information about their positions together with the precise time. Knowing the co-ordinates of the satellite and using the traveled radio signal emitted from the GPS satellites, the GPS receiver in the car measures the distance to the satellite and is able to calculate its position therefrom. In conclusion, by using a GPS system in a moving car, the traveled distance of the car can easily be calculated. On the basis of the actually traveled distance d2, and on the basis of the number of rotations N, the actual radius of the tire $r_{act}$ can be calculated. The inflation pressure of the tire can be determined by means of the calculated radius $r_{act}$.

In a preferred embodiment the exact traveled distance d2 is calculated by using the GPS data together with data detected by a motion detector. Normally the GPS receiver provides a data set of the co-ordinates of the receiver in space every second. The exact path between two received data sets of the moving vehicle is not known. Therefore, a motion detector like a compass, a gyroscopic device, steering wheel limit switches, and/or right or left acceleration sensors are used together with the GPS data for determining the exact path of the moving vehicle. These hybrid navigation systems rely on GPS and the use of gyroscopes to optimize performance. Accordingly it is possible to precisely calculate the second traveled distance d2 by using the GPS data and the data detected by a motion detector like a gyroscopic device. The precisely calculated distance d2 is necessary in subsequent steps of the method according to the invention for obtaining precise results of the calculated actual radius of the tire.

In one embodiment of the present invention, the first traveled distance d 1 based on a number of rotations of the tire is determined by using the detected number of rotations N of the tire measured by the rotation detector. The distance $d_{rot}$ is determined by using the following equation:

$$d1 = 2\pi \cdot r \cdot N,$$

r being a predetermined value of the radius and N being the number of rotations of the tire.

These two distances d1 and d2 being known, they can be compared.

According to the present invention, an irregular inflation pressure is detected, if the difference between the first traveled distance d1 and the second traveled distance d2 obtained via GPS is larger than a predetermined threshold value V. If the differences between the results of d1 and d2 differ from each other by a certain amount, this means that the distance d1 calculated by means of the number of rotations depending on radius r is, e.g., much larger than the distance d2. In case of a low pressure tire, this tire rotates faster than the other tires so that the calculated distance d1 using a higher predetermined value r of the tire is higher than in reality.

The actual radius of the tire can be determined by the following equation:

$$d2 = 2\pi \cdot r_{act} \cdot N.$$

The GPS system provides the exact traveled distance d2, the rotation detector gives the number of rotations N, so that the actual radius of the tire can be calculated. This actual radius $r_{act}$ depends directly on the inflation pressure of the tire so that the inflation pressure of the tire can be deduced from the radius of the tire.

However, the radius of the tire does not depend only on the inflation pressure, but also on rotational forces at high velocities, and on heat. The circumference of the tire for example increases with higher velocities since the centrifugal force increases with higher angular velocities. This increase can be as high as 5 cm for a car traveling at a velocity of more than 200 km/h. The distance d1 is determined by using a predetermined value of the radius r of the tire. It is therefore important to adapt this predetermined value r to the actual driving conditions of the vehicle. Therefore, the distance d1 at time T is calculated by using the actual radius of the tire $r_{act}$ at time T minus 1 as predetermined value of the radius r. If the method for determining the radius r is repeated, for example every 1 to 10 seconds, the present radius $r_{act}$ detected in a situation 1 to 10 seconds earlier, can be used to determine d1 so that a changing radius of the tire due to rotational forces at high velocities, or heat, is taken into account when the distance d1 based on the number of rotations is calculated. In conclusion, misinterpreting a changing tire radius caused by high velocities as an irregular inflation pressure is prevented or highly reduced. Therefore, an irregular inflation pressure is only determined by using the differences between d2 and d1 if an actual puncture or slow leak of the tire is present. In conclusion, a very reliable method for determining the inflation pressure is obtained.

In an embodiment of the present invention the actual value $r_{act}$ is calculated for all tires of the vehicle and the results are compared to each other. If a calculated radius $r_{act}$ differs from another calculated radius by a predetermined amount, it can be deduced that a low pressure situation is present.

In case only one radius of the calculated radius for all tires differs from the others, a low pressure condition is probably present.

In another embodiment of the present invention, the calculated radii $r_{act}$ are compared for one axle of the vehicle. If they differ by a predetermined amount, a low pressure condition is very probably present. This irregular pressure can be monitored to the vehicle operator. A tire inflation pressure monitor may indicate each tire inflation pressure being detected and may also be adapted to produce an alarm when an irregular pressure is detected. The location of the tire concerned by an inflation pressure alarm may also be indicated. The tire inflation pressure monitor adapted to provide such indication may be located, by way of example, in the visor area of the vehicle, attached to the sun visor or built into a console of the vehicle. Alternatively, the tire inflation pressure monitor may be attached to or built into the dashboard of the vehicle, or the pressure can be announced by voice, projected onto a surface such as a windshield, displayed by video monitor, etc.

In another embodiment of the present invention, the engine of the vehicle can be stopped, if an irregular inflation pressure of a tire is determined over a certain traveled distance. In a further embodiment, the mileage of the vehicle may be tracked, when there is a "no pressure" condition for any one of the tires.

In another embodiment an average actual radius $r_{actAV}$ is calculated for each tire, taking into account the last M calculations of $r_{act}$, M varying, e.g., between 10 and 100. Comparing the average radius values $r_{act}$ of each tire of one axle of the vehicle, an irregular inflation pressure can easily be recognized. Using the average radius of multiple measurements the reliability of the system can be increased since single erroneous calculated values have less influence on the determination of an irregular inflation pressure.

In a further embodiment the number of revolutions N of all tires of the vehicle are compared, and a tire having a number of revolutions differing from the other tires by a predetermined amount is not used for determining the inflation pressure. In this case, the slipping of one tire, when the vehicle travels on dirt, sand or snow, and one tire spins more frequently over the traveled distance than the others, can be recognized. Since the present method would produce false results when the tires slip, a slipping tire is recognized and not used for the calculation of the inflation pressure.

The present invention also relates to a system for determining a change of a tire inflation pressure, comprising a first means for determining a first traveled distance d 1 of the tire of the vehicle by using a first calculation method, a second means for determining a second traveled distance d2 of the tire of the vehicle by using a second calculation method, and a calculation unit for calculating the difference between d1 and d2.

According to the present invention, the second means may comprise a GPS receiver for receiving GPS data of a moving vehicle. Furthermore, the second means may comprise a means for calculating the second traveled distance d2 of the moving vehicle based on the received GPS data.

The first means may comprise a rotation detector for detecting the number of rotations N of the tire of the moving vehicle. This rotation detector is necessary to determine the first traveled distance d1.

Furthermore, a means for calculating a radius of the tire $r_{act}$ based on the traveled second distance d2 and on the detected number of rotations N, and for determining the inflation pressure of the tire based on the calculated radius $r_{act}$ of the tire is provided.

According to one embodiment of the present invention the system has a gyroscopic device, a monitoring device, a non-volatile memory for storing the predetermined radius r and the actual radius $r_{act}$, a transmitter/receiver unit for transmitting the radius of the tire to a remote base station, the system determining an irregular pressure according to the methods described above.

The other objects, features and advantages of the present invention will become apparent in the course of the following description, referring to the accompanying drawings.

Figure 1 shows a schematic view of a moving vehicle incorporating features of the present invention,
Figure 2 shows a flow chart for determining an irregular inflation pressure using a method according to the present invention,
Figure 3 shows a schematic system for determining the inflation pressure according to the present invention,
Figure 4 shows the flow chart of another embodiment of a part of Figure 2.
Figure 5 shows another embodiment for determining an irregular inflation pressure.

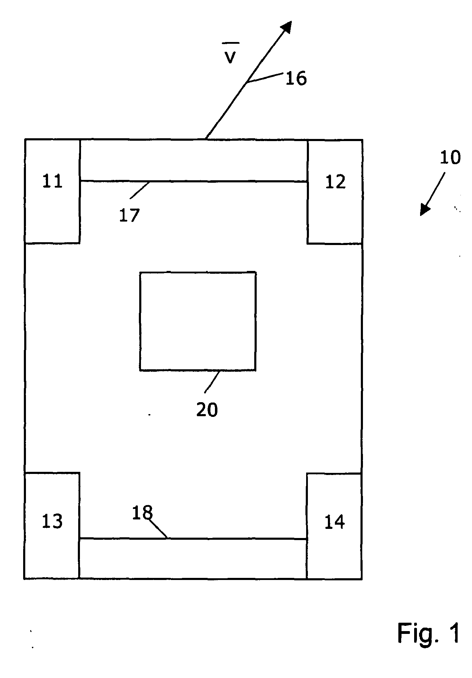

Figure 1 shows a vehicle 10 having four tires 11, 12, 13 and 14 in a system 20 for determining the inflation pressure. The vehicle 10 is moving at velocity v as indicated by the arrow 16. The tires 11, 12 belong to the front axle 17, the tires 13, 14 belong to the back axle 18.

It should be understood that the vehicle 10 could have any number of tires with any number of axles. Furthermore, the present invention is not restricted to vehicles. It can be used in every kind of moving means comprising airplanes, motorcycles, bicycles, mobile industrial equipment and the like, if they comprise a gas-inflated tire which rolls on a support.

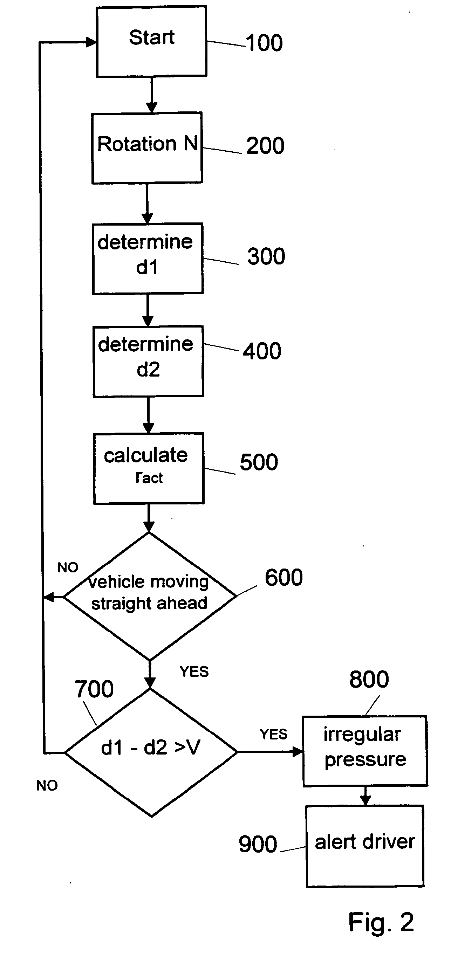

In Figure 2 an operational flow chart to determine the inflation pressure is shown. When the car is moving, the method is started at step 100. In a step 200 the number of rotations N of each tire is detected using a rotation detector. This detector can, for example, be part of an ABS system of the vehicle or of any other system using a rotation detector.

Knowing the number of rotations N obtained at step 200 the distance d1 based on the number of rotations of the tire can be determined by using the following equation:

$$d1 = 2\pi \cdot r \cdot N \text{ (step 300)},$$

r being a predetermined value.

In step 400 the traveled distance d2 is calculated by using the detected GPS signal from the moving vehicle, which is detected by the GPS receiver installed in the vehicle. For the precise calculation of the traveled distance d2, a hybrid GPS system is used, i.e., a GPS system together with a gyroscopic device. With these two systems, the accurate traveled distance can be determined.

Knowing the traveled distance d2 and the number of rotations N, the actual radius $r_{act}$ can be determined by using the following equation:

$$d2 = 2\pi \cdot r_{act} \cdot N \text{ (step 500)}.$$

After the calculation of d1 based on the number of rotations it can be detected whether the vehicle is going straight ahead or whether the vehicle is turning (step 600). This step can be omitted, but in this case the different radius values r of each tire are to be considered since each tire follows a different radius r when the vehicle turns around a bend. If the vehicle turns to the right, indicated by arrow 16 in Figure 1, then the right rear tire 14 will be on the innermost circle, the right front tire 12 will be on the next to innermost circle, the left rear tire 13 will be on the next outermost circle and the left front tire 11 will be on the outermost circle. Accordingly, by knowing the direction in which the vehicle is turning by means of the motion detector (gyroscopic device), the method according to the present invention can also be carried out when the vehicle is not driving straight. However the method can be carried out more easily when steps 200 to 500 are carried out during a straight movement of the vehicle.

In a next step, the distance d1 based on the number of rotations is compared to the distance d2 calculated by using the GPS data (step 700). If the difference between these two distances is larger than a threshold value V, an irregular inflation pressure is detected (step 800) and the driver should be alerted (step 900). If the difference is within the predetermined value V, the whole method can be started again.

Instead of determining if the vehicle is going straight, in step 600 it can also be determined whether a large positive or negative acceleration is present. In case of a large negative acceleration, i.e., when the driver is braking, it is probable that the tires of the vehicle will slip, so that no accurate results for determining d1 can be obtained. In this case, step 600 can be replaced by another step, in which the acceleration of the vehicle can be taken into account. If no low pressure condition is detected, the method can start again. This time, d1 is determined by using the value of $r_{act}$ calculated the time before at step 500.

It should be understood that, when the method according to the present invention is carried out for the first time after starting the engine of the vehicle, step 500 including the calculation of $r_{act}$ can be carried out at the beginning, if the number of rotations N and the traveled distance d2 are known. This first calculated value of $r_{act}$ can then be used for determining d1, so that the previously calculated value $r_{act}$ is the predetermined value r.

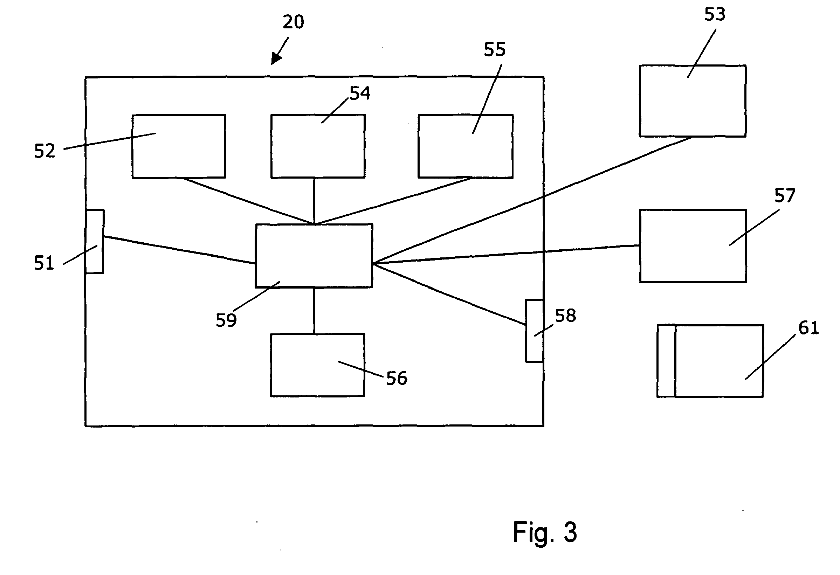

In Figure 3 a schematic view of the system for determining the inflation pressure of a tire of a moving vehicle 20 is shown. The system comprises a GPS receiver 51 for receiving the GPS signals emitted from the satellites for determining the distance traveled by the vehicle. The system further comprises a means 52 for calculating the traveled distance d2 of the moving vehicle by using the GPS data. The system further comprises a rotation detector 53 for detecting the number of rotations of the tires, one detector 53 being present for each tire of the vehicle. A means 54 calculates the radius of the tire by using a traveled distance d2 and the number of rotations N measured by detector 53. A motion detector 55 helps to determine the exact traveled distance d2 or helps to determine whether the vehicle is going straight ahead or whether there is a positive or negative acceleration of the vehicle. A non-volatile memory 56 stores the predetermined radius r of the tire and the actual radius $r_{act}$ of the tire. In case an irregular inflation pressure is detected, the driver of the vehicle can be alerted by using a monitor 57. As indicated above an alarm could also be produced. Furthermore, the location of the tire giving the inflation pressure alarm may also be indicated. This monitor 57 adapted to provide such an alarm may be located anywhere in the car, for example in the visor area of the vehicle, attached to a sun visor or built into a console of the vehicle. The monitor 57 may also be attached to or built into a dashboard of the vehicle, or the pressure alarm may be announced by voice, projected onto a surface such as a windshield etc. All the above mentioned devices 51 to 58 are connected to an electrical control unit 59 that controls the system 20.

The inflation pressure can also be transmitted to a remote base station 61 using a transmitter/receiving unit 58. The base station 61 can for example be the base station of a cellular telephone network, the transmitter/receiver unit 58 being, for example, a cellular telephone. The base station 61 can, for example, be used as an inspection station for all kinds of vehicles, e.g., for all kinds of rented cars of a car rental company.

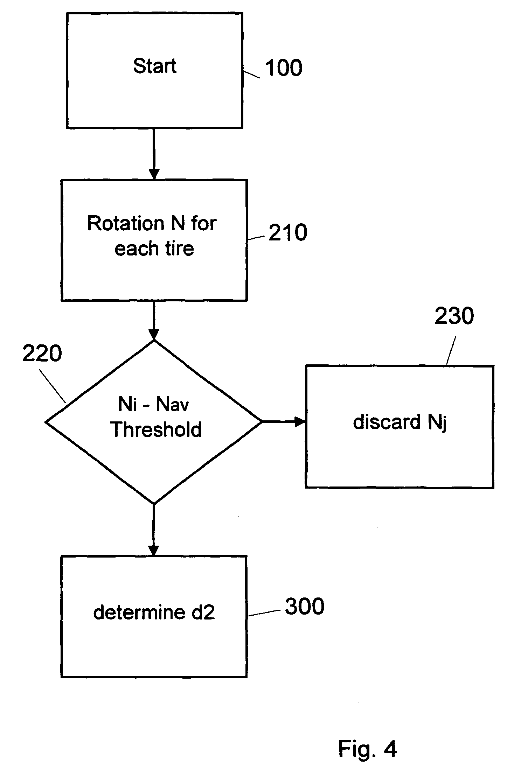

In Figure 4, a flow chart of a further embodiment of the present invention is shown. The steps already mentioned in Figure 2 have the same reference signs and are not explained in further detail. The embodiment shown in Figure 4 can be used if it is to be determined whether one wheel is slipping or not. In step 210, the number of rotations is determined for all wheels of the vehicle. In the following step 220 the average number of rotations $N_{av}$ is calculated and it is determined whether the number of rotations $N_i$ for one wheel differs from the average number $N_{av}$ by a predetermined amount. If this is the case, the tire showing this condition, is discarded (step 230). If all values n are within a certain range, step 300 including the determination of the traveled distance d2 can follow.

The above mentioned steps can also be carried out for one axle of the vehicle, so that the slipping wheel of one axle can be determined and will not be used for the determination of the inflation pressure by using GPS.

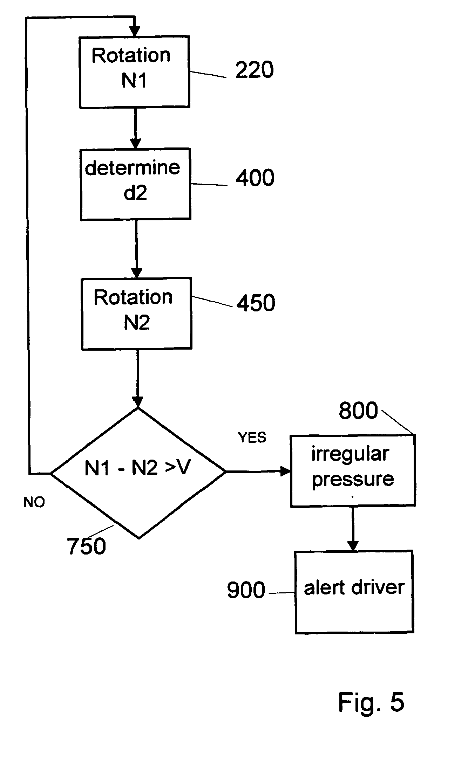

A change of a tire inflation of a vehicle can not only be calculated by using the traveled distances d1 and d2, but also by taking the number of rotations N of the tires as a basis. This case is shown in Fig. 5. In a step 210, the number of rotations N 1 is detected by using the rotation detector. In step 400, the traveled distance d2 is calculated by using the detected GPS signal from the moving vehicle, which is detected by the GPS receiver of the vehicle. In the next step 450, the number of rotations based on the traveled distance d2 based on the GPS signal can be determined by using the following equation:

$$d2 = 2\pi \cdot r \cdot N2,$$

r being a predetermined value of the radius.

These two numbers of rotations N1 and N2 can be compared.

According to the present invention, an irregular inflation pressure is detected, if a difference between the measured value N1 and the calculated value N2 is larger than a predetermined threshold value X (step 750). If the difference is larger than X, an irregular inflation pressure is detected (step 800) and the driver should be alerted (step 900). If the difference is smaller than the predetermined value X, the whole method can be started again.

In conclusion, the present invention provides an easy and fast method for determining whether an inflation pressure of a tire of a moving vehicle changes because of a puncture, slow leak or other low pressure conditions.

**Claims**

1. Method for determining a change of a tire inflation pressure, comprising the following steps:

    - determining a first traveled distance d1 of the tire of the vehicle by using a first calculation method,
    - determining a second traveled distance d2 of the tire of the vehicle by using a second calculation method, the second calculation method comprising the steps of:
    - detecting a GPS signal of a moving vehicle (10),
    - calculating the second traveled distance d2 of the moving vehicle on the basis of the detected GPS signal,
    and
    - calculating the difference between d1 and d2

    **characterized in that**
    the traveled distance d2 is calculated by using the GPS data together with data detected by a motion detector (55).

2. Method according to claim 1,
    **characterized in that**
    the first calculation method for determining d1 comprises the step of detecting the number of rotations N of the tire of the vehicle by means of a rotation detector (53), d1 being calculated by the following equation:

$$2\pi \cdot r \cdot N,$$

r being a predetermined value of the radius of the tire.

3. Method according to claim 1 or 2, comprising the steps of

    - calculating the radius $r_{act}$ of the tire on the basis of the second traveled distance d2 and the number of rotations N, and
    - determining the inflation pressure of the tire from the calculated radius $r_{act}$.

4. Method according to claim 1,
    **characterized in that**
    the motion detector is a compass, gyroscopic device, steering wheel limit switch, and/or right/left acceleration sensor.

5. Method according to claim 3 or 4,
    **characterized in that**
    the actual radius $r_{act}$ is determined by using the following equation:

$$d2 = 2\pi \cdot r_{act} \cdot N.$$

6. Method according to any one of claims 3 to 5,
    **characterized in that**
    $r_{act}$ is determined at regular intervals of n seconds, n varying between 1 and 10 seconds.

7. Method according to any one of claims 3 to 6,
    **characterized in that**
    $r_{act}$ is the predetermined value for the radius of the tire for the calculation of d1.

8. Method according to any of the preceding claims,
    **characterized in that**
    an irregular inflation pressure is detected if the difference between the distance d1 and the distance d2 is larger than a predetermined threshold value.

9. Method according to any one of claims 3 to 8,
    **characterized in that**
    the value $r_{act}$ is calculated for all tires of the vehicle and the results are compared to each other.

10. Method according to claim 9,
    **characterized in that**
    an irregular inflation pressure is determined if one calculated actual radius $r_{act}$ of one axle of the vehicle differs from the other calculated radius values of the axle by a predetermined amount.

**11.** Method according to any one of the preceding claims,
**characterized in that**
an irregular pressure is monitored in order to alert the driver of the vehicle.

**12.** Method according to any one of the preceding claims,
**characterized in that**
an average actual radius $r_{actAV}$ is calculated for each tire using M different measurements.

**13.** Method according to any one of the preceding claims,
**characterized in that**
the number of revolutions of all tires N of the vehicle are compared, and a tire having a number of revolutions differing from the other tires by a predetermined amount is not used for determining the inflation pressure.

**14.** Method according to any of the preceding claims,
**characterized in that**
the engine of the vehicle is stopped if an irregular inflation pressure of a tire is determined over a certain traveled distance.

**15.** Method according to any one of claims 2 to 14,
**characterized in that**
the predetermined value r for the calculation of d1 is stored in a non-volatile memory if d1 is calculated for the first time.

**16.** Method according to any one of the preceding claims,
**characterized in that**
the calculated radius r is transmitted to a remote base station.

**17.** System for determining a change of a tire inflation pressure, comprising:

- a first means for determining a first traveled distance d1 of the tire of the vehicle by using a first calculation method,
- a second means for determining a second traveled distance d2 of the tire of the vehicle by using a second calculation method, the second means comprising a GPS receiver (51) for receiving GPS data of a moving vehicle, and comprising a means (52) for calculating the second traveled distance d2 of the moving vehicle based on the received GPS data, and
- a calculation unit for calculating the difference between d1 and d2,

**characterized by**

a motion detector (55) in order to calculate the exact traveled distance d2.

**18.** System according to claim 17,
**characterized in that**
the first means comprises a rotation detector (53) for detecting the number of rotations N of the tire of the moving vehicle.

**19.** System according to any of claims 17 to 18, further comprising means (54) for calculating a radius of the tire $r_{act}$ based on the traveled distance d2 and the detected number of rotations N, and for determining the inflation pressure of the tire based on the calculated radius $r_{act}$ of the tire.

**20.** System according to claim 17,
**characterized in that**
the motion detector (55) is a compass, gyroscopic device, steering wheel limit switch, and/or right/left acceleration sensor.

**21.** System according to any of claims 17 to 20, further comprising a monitoring device (57) alerting the driver of the vehicle in case of the detection of an irregular pressure.

**22.** System according to any of claims 17 to 24, further comprising a non-volatile memory (56) for storing the value of the predetermined radius r of the tire and of the actual radius $r_{act}$ of the tire.

**23.** System according to any one of claims 17 to 22, further comprising a transmitter/receiver unit (58) for transmitting the radius of the tire to a remote base station (61).

**24.** System according to any of claims 17 to 23,
**characterized in that**
the radius $r_{act}$ and the inflation pressure are determined using the method as claimed in claims 1 to 16.

**Patentansprüche**

**1.** Verfahren zum Ermitteln einer Reifendruckänderung, umfassend die folgenden Schritte:

- Ermitteln einer ersten zurückgelegten Entfernung d1 des Fahrzeugreifens unter Verwendung einer ersten Berechnungsmethode,
- Ermitteln einer zweiten zurückgelegten Entfernung d2 des Fahrzeugreifens unter Verwendung einer zweiten Berechnungsmethode, wobei die zweite Berechnungsmethode die Schritte umfasst:
- Erfassen eines GPS-Signals eines sich bewegenden Fahrzeugs (10),

- Berechnen der zweiten zurückgelegten Entfernung d2 des sich bewegenden Fahrzeugs auf der Basis des erfassten GPS-Signals, und
- Berechnen der Differenz zwischen d1 und d2,

**dadurch gekennzeichnet,**
**dass** die zurückgelegte Entfernung d2 berechnet wird, indem die GPS-Daten zusammen mit von einem Bewegungsdetektor (55) erfassten Daten verwendet werden.

2. Verfahren nach Anspruch 1,
**dadurch gekennzeichnet,**
**dass** die erste Berechnungsmethode zum Ermitteln von d1 den Schritt Erfassen der Anzahl von Drehungen N des Fahrzeugreifens mittels eines Rotationssensors (53) umfasst, wobei d1 mit der folgenden Gleichung berechnet wird:

$$2\pi \cdot r \cdot N \ ,$$

wobei r ein vorherbestimmter Wert für den Reifenradius ist.

3. Verfahren nach Anspruch 1 oder 2, umfassend die Schritte

- Berechnen des Radius $r_{act}$ des Reifens auf der Grundlage der zweiten zurückgelegten Entfernung d2 und der Anzahl von Drehungen N, und
- Ermitteln des Reifendrucks aus dem berechneten Radius $r_{act}$.

4. Verfahren nach Anspruch 1, **dadurch gekennzeichnet, dass** der Bewegungsdetektor ein Kompass, eine Kreiseleinrichtung, ein Lenkradgrenzschalter und/oder ein Rechts-/Linksbeschleunigungssensor ist.

5. Verfahren nach Anspruch 3 oder 4, **dadurch gekennzeichnet, dass** der tatsächliche Radius $r_{act}$ unter Verwendung der folgenden Gleichung ermittelt wird:

$$d2 = 2\pi \cdot r_{act} \cdot N \ .$$

6. Verfahren nach einem der Ansprüche 3-5, **dadurch gekennzeichnet, dass** $r_{act}$ in regelmäßigen Intervallen von n Sekunden ermittelt wird, wobei n zwischen 1 Sekunde und 10 Sekunden liegt.

7. Verfahren nach einem der Ansprüche 3-6, **dadurch gekennzeichnet, dass** $r_{act}$ der vorherbestimmte Wert für den Reifenradius für die Berechnung von d1 ist.

8. Verfahren nach einem der vorhergehenden Ansprüche, **dadurch gekennzeichnet, dass** ein irregulärer Reifendruck erkannt wird, falls die Differenz zwischen der Entfernung d1 und der Entfernung d2 größer als ein vorherbestimmter Schwellenwert ist.

9. Verfahren nach einem der Ansprüche 3-8, **dadurch gekennzeichnet, dass** der Wert $r_{act}$ für alle Reifen des Fahrzeugs berechnet wird, und dass die Ergebnisse miteinander verglichen werden.

10. Verfahren nach Anspruch 9, **dadurch gekennzeichnet, dass** ein irregulärer Reifendruck ermittelt wird, falls sich ein berechneter tatsächlicher Radius $r_{act}$ einer Fahrzeugachse um einen vorherbestimmten Betrag von den anderen berechneten Radiuswerten der Achse unterscheidet.

11. Verfahren nach einem der vorhergehenden Ansprüche, **dadurch gekennzeichnet, dass** ein irregulärer Druck überwacht wird, um den Fahrer des Fahrzeugs zu warnen.

12. Verfahren nach einem der vorhergehenden Ansprüche, **dadurch gekennzeichnet, dass** ein durchschnittlicher tatsächlicher Radius $r_{actAV}$ für jeden Reifen berechnet wird, wobei M verschiedene Messungen verwendet werden.

13. Verfahren nach einem der vorhergehenden Ansprüche, **dadurch gekennzeichnet, dass** die Anzahl von Umdrehungen aller Reifen N des Fahrzeugs verglichen wird, und dass ein Reifen, welcher eine Anzahl von Umdrehungen aufweist, die sich um einen vorherbestimmten Betrag von den anderen Reifen unterscheidet, nicht zur Ermittlung des Reifendrucks verwendet wird.

14. Verfahren nach einem der vorhergehenden Ansprüche, **dadurch gekennzeichnet, dass** der Motor des Fahrzeugs abgestellt wird, falls über eine bestimmte zurückgelegte Entfernung hinweg ein irregulärer Reifendruck ermittelt wird.

15. Verfahren nach einem der Ansprüche 2-14, **dadurch gekennzeichnet, dass** der vorherbestimmte Wert r für die Berechnung von d1 in einem nichtflüchtigen Speicher gespeichert wird, falls d1 zum ersten Mal berechnet wird.

16. Verfahren nach einem der vorhergehenden Ansprüche, **dadurch gekennzeichnet, dass** der berechnete Radius r zu einer entfernten Basisstation übertragen wird.

**17.** System zum Ermitteln einer Reifendruckänderung, umfassend:

- ein erstes Mittel zum Ermitteln einer ersten zurückgelegten Entfernung d1 des Fahrzeugreifens unter Verwendung einer ersten Berechnungsmethode,
- ein zweites Mittel zum Ermitteln einer zweiten zurückgelegten Entfernung d2 des Fahrzeugreifens unter Verwendung einer zweiten Berechnungsmethode, wobei das zweite Mittel einen GPS-Empfänger (51) zum Empfangen von GPS-Daten eines sich bewegenden Fahrzeugs und ein Mittel (52) zum Berechnen der zweiten zurückgelegten Entfernung d2 des sich bewegenden Fahrzeugs auf der Grundlage der empfangenen GPS-Daten umfasst, und
- eine Recheneinheit zum Berechnen der Differenz zwischen d1 und d2,
**gekennzeichnet durch**
einen Bewegungsdetektor (55), um die genaue zurückgelegte Entfernung d2 zu berechnen.

**18.** System nach Anspruch 17,
**dadurch gekennzeichnet,**
**dass** das erste Mittel einen Rotationssensor (53) zum Erfassen der Anzahl von Drehungen N des Reifens des sich bewegenden Fahrzeugs umfasst.

**19.** System nach einem der Ansprüche 17-18, welches weiterhin Mittel (54) zum Berechnen eines Radius der Reifens $r_{act}$ auf der Grundlage der zurückgelegten Entfernung d2 und der erfassten Anzahl von Drehungen N und zum Ermitteln des Reifendrucks auf der Grundlage des berechneten Radius $r_{act}$ des Reifens umfasst.

**20.** System nach Anspruch 17, **dadurch gekennzeichnet, dass** der Bewegungsdetektor (55) ein Kompass, eine Kreiseleinrichtung, ein Lenkradgrenzschalter und/oder ein Rechts-/Linksbeschleunigungssensor ist.

**21.** System nach einem der Ansprüche 17-20, welches weiterhin eine Überwachungseinrichtung (57) umfasst, welche den Fahrer des Fahrzeugs warnt, falls ein irregulärer Druck erkannt wird.

**22.** System nach einem der Ansprüche 17-21, welches weiterhin einen nicht-flüchtigen Speicher (56) zum Speichern des Werts des vorherbestimmten Radius r des Reifens und des tatsächlichen Radius $r_{act}$ des Reifens umfasst.

**23.** System nach einem der Ansprüche 17-22, welches weiterhin eine Sender-/Empfängereinheit (58) zum Übertragen des Radius des Reifens zu einer entfernten Basisstation (61) umfasst.

**24.** System nach einem der Ansprüche 17-23, **dadurch gekennzeichnet, dass** der Radius $r_{act}$ und der Reifendruck unter Verwendung des Verfahrens nach den Ansprüchen 1-16 ermittelt wird.

## Revendications

**1.** Procédé pour déterminer un changement d'une pression de gonflage d'un pneu, comprenant les étapes suivantes :

- déterminer une première distance parcourue d1 du pneu du véhicule en utilisant une première méthode de calcul,
- déterminer une seconde distance parcourue d2 du pneu du véhicule en utilisant une seconde méthode de calcul, la seconde méthode de calcul comprenant les étapes de :
- détecter un signal GPS d'un véhicule mobile (10),
- calculer la seconde distance parcourue d2 du véhicule mobile sur la base du signal GPS détecté, et
- calculer la différence entre d1 et d2,

**caractérisé en ce que** la distance parcourue d2 est calculée en utilisant les données GPS ensemble avec les données détectées par un détecteur de mouvement (55).

**2.** Procédé selon la revendication 1, **caractérisé en ce que** la première méthode de calcul pour déterminer d1 comprend l'étape de détecter le nombre de rotation N du pneu du véhicule au moyen d'un détecteur de rotation (53), d1 étant calculé par l'équation suivante :

$$2\pi.r.N,$$

r étant une valeur prédéterminée du rayon du pneu.

**3.** Procédé selon la revendication 1 ou 2, comprenant les étapes de :

- calculer le rayon $r_{act}$ du pneu sur la base de la seconde distance parcourue d2 et le nombre de rotation N, et
- déterminer la pression de gonflage du pneu à partir du rayon calculé $r_{act}$.

**4.** Procédé selon la revendication 1, **caractérisé en ce que** le détecteur de mouvement est un compas, un dispositif gyroscopique, un contact de fin de course du volant de direction, et/ou un capteur d'accélération droite/ gauche.

**5.** Procédé selon la revendication 3 ou 4, **caractérisé en ce que** le rayon réel $r_{act}$ est déterminé en utilisant l'équation suivante :

$$d2 = 2\pi.r_{act}.N.$$

**6.** Procédé selon l'une quelconque des revendications 3 à 5, **caractérisé en ce que** $r_{act}$ est déterminé à des intervalles réguliers de n secondes, n variant entre 1 et 10 secondes.

**7.** Procédé selon l'une quelconque des revendications 3 à 6, **caractérisé en ce que** $r_{act}$ est la valeur prédéterminée pour le rayon du pneu pour le calcul de d1.

**8.** Procédé selon l'une quelconque des revendications précédentes, **caractérisé en ce que** une pression de pneu de gonflage irrégulière est détectée si la différence entre la distance d1 et la distance d2 est plus grande qu'une valeur seuil prédéterminée.

**9.** Procédé selon l'une quelconque des revendications 3 à 8, **caractérisé en ce que** la valeur $r_{act}$ est calculée pour tous les pneus du véhicule et les résultats sont comparés les uns aux autres.

**10.** Procédé selon la revendication 9, **caractérisé en ce que** une pression de gonflage irrégulière est déterminée si un rayon réel $r_{act}$ calculé d'un essieu du véhicule diffère des autres valeurs de rayon calculées de l'essieu par une quantité prédéterminée.

**11.** Procédé selon l'une quelconque des revendications précédentes, **caractérisé en ce que** une pression irrégulière est surveillée afin d'alerter le conducteur du véhicule.

**12.** Procédé selon l'une quelconque des revendications précédentes, **caractérisé en ce que** un rayon réel moyen $r_{actAV}$ est calculé pour chaque pneu en utilisant M différentes mesures.

**13.** Procédé selon l'une quelconque des revendications précédentes, **caractérisé en ce que** le nombre de révolutions de tous les pneus N du véhicule sont comparées, et un pneu ayant un nombre de révolution différent des autres pneus d'une quantité prédéterminée n'est pas utilisé pour déterminer la pression de gonflage.

**14.** Procédé selon l'une quelconque des revendications précédentes, **caractérisé en ce que** le moteur du véhicule est stoppé si une pression de gonflage irrégulière d'un pneu est déterminée sur une certaine distance parcourue.

**15.** Procédé selon l'une quelconque des revendications 2 à 14, **caractérisé en ce que** la valeur prédéterminée r pour le calcul de d1 est conservée dans une mémoire non volatile si d1 est calculé pour la première fois.

**16.** Procédé selon l'une quelconque des revendications précédentes, **caractérisé en ce que** le rayon calculé r est transmis à une station de base située à distance.

**17.** Système pour déterminer un changement d'une pression de gonflage de pneu, comprenant :

- des premiers moyens pour déterminer une première distance parcourue d1 du pneu du véhicule en utilisant une première méthode de calcul,
- des seconds moyens pour déterminer une seconde distance parcourue d2 du pneu du véhicule en utilisant une seconde méthode de calcul, les seconds moyens comprenant un récepteur GPS (51) pour recevoir des données GPS d'un véhicule mobile, et comprenant des moyens (52) pour calculer la seconde distance parcourue d2 du véhicule mobile en se basant sur les données GPS reçues, et
- une unité de calcul pour calculer la différence entre d1 et d2,

**caractérisé par** un détecteur de mouvement (55) pour calculer la distance parcourue exacte d2.

**18.** Système selon la revendication 17, **caractérisé en ce que** les premiers moyens comprennent un détecteur de rotation (53) pour détecter le nombre de rotations N du pneu du véhicule mobile.

**19.** Système selon l'une quelconque des revendications 17 à 18, comprenant en outre des moyens (54) pour calculer un rayon du pneu $r_{act}$ en se basant sur la distance parcourue d2 et sur le nombre de rotation détecté N et pour déterminer la pression de gonflage du pneu en se basant sur le rayon calculé $r_{act}$ du pneu.

**20.** Système selon la revendication 17, **caractérisé en ce que** le détecteur de mouvement (55) est un compas, un dispositif gyroscopique, un contact de fin de course du volant de direction, et/ou un capteur d'accélération droite/ gauche.

**21.** Système selon l'une quelconque des revendications 17 à 20, comprenant en outre un dispositif de surveillance (57) alertant le conducteur du véhicule en cas de détection d'une pression irrégulière.

**22.** Système selon l'une quelconque des revendications 17 à 21, comprenant en outre une mémoire non volatile (56) pour conserver la valeur du rayon prédéterminée r du pneu et du rayon réel $r_{act}$ du pneu.

23. Système selon l'une quelconque des revendications 17 à 22, comprenant en outre une unité transmetteur/récepteur (58) pour transmettre le rayon du pneu à une station de base située à distance (61).

24. Système selon l'une quelconque des revendications 17 à 23, **caractérisé en ce que** la rayon $r_{act}$ et la pression de gonflage sont déterminés en utilisant le procédé tel que revendiqué dans les revendications 1 à 16.

Fig. 1

```
        ┌─────────┐
    ┌──▶│  Start  │────── 100
    │   └─────────┘
    │        │
    │        ▼
    │   ┌──────────┐
    │   │Rotation N│────── 200
    │   └──────────┘
    │        │
    │        ▼
    │   ┌──────────┐
    │   │determine │────── 300
    │   │   d1     │
    │   └──────────┘
    │        │
    │        ▼
    │   ┌──────────┐
    │   │determine │────── 400
    │   │   d2     │
    │   └──────────┘
    │        │
    │        ▼
    │   ┌──────────┐
    │   │calculate │────── 500
    │   │  r_act   │
    │   └──────────┘
    │        │
    │        ▼
    │    NO  ╱╲
    │◀──────╱  ╲── 600
    │  ╲vehicle moving╱
    │   ╲straight ahead╱
    │        ╲╱
    │         │ YES
    │  700    ▼
    │    ╱╲         YES    ┌──────────┐ ── 800
    └───╱  ╲──────────────▶│irregular │
        ╲d1 - d2 >V╱       │ pressure │
         ╲╱                └──────────┘
         │ NO                   │
                                ▼
                           ┌──────────┐
                    900 ───│alert driver│
                           └──────────┘
```

Fig. 2

Fig. 3

Start 100

Rotation N for each tire 210

220 Ni - Nav Threshold

discard Nj 230

determine d2 300

Fig. 4

Fig. 5